# EUROPÄISCHE PATENTSCHRIFT

(11) **EP 4 348 043 B1**
(45) Veröffentlichungstag und Bekanntmachung des Hinweises auf die Patenterteilung: **02.07.2025**
(21) Anmeldenummer: 22727069.1
(22) Anmeldetag: 02.05.2022
(51) Int. Cl.: F03D 7/04

(54) **VERFAHREN ZUM TRAINIEREN EINES MACHINE-LEARNING-MODELLS ZUM BESTIMMEN EINER RESTNUTZUNGSDAUER EINER WEITEREN WINDKRAFTANLAGE**
METHOD FOR TRAINING A MACHINE LEARNING MODEL TO BE USED TO DETERMINE A REMAINING LIFE OF A FURTHER WIND POWER INSTALLATION
PROCÉDÉ DE FORMATION D'UN MODÈLE D'APPRENTISSAGE MACHINE UTILISÉ POUR DÉTERMINER UNE DURÉE DE VIE RESTANTE D'UNE AUTRE INSTALLATION D'ÉNERGIE ÉOLIENNE

(30) Priorität: 26.05.2021 DE 102021113547
(43) Veröffentlichungstag der Anmeldung: 10.04.2024
(73) Patentinhaber: RWE Renewables Europe & Australia GmbH, 45141 Essen (DE)
(72) Erfinder: MOSER, Wolfgang, 45141 Essen (DE)
(74) Vertreter: Cohausz & Florack
(86) Internationale Anmeldenummer: PCT/EP2022/061701
(87) Internationale Veröffentlichungsnummer: WO 2022/248164

(56) Entgegenhaltungen:
- EP-A1- 3 260 700
- EP-A1- 3 608 538
- WO-A1-2020/200421
- US-A1- 2014 100 703
- US-A1- 2021 123 416

## Beschreibung

Die Anmeldung betrifft ein Verfahren zum Trainieren eines Machine-Learning-Modells, insbesondere verwendbar zum Bestimmen, insbesondere Schätzen, eines Anlagenzustands mindestens eines Bauteils einer Windkraftanlagen, besonders bevorzugt verwendbar zum Bestimmen, insbesondere Schätzen, einer Restnutzungsdauer der Windkraftanlage. Die Anmeldung betrifft darüber hinaus ein Verfahren zum Verwenden eines Machine-Learning-Modells und eine Rechenvorrichtung.

Elektrische Energie wird vermehrt unter Nutzung von erneuerbaren Energien generiert. So werden (Onshore- und/oder Offshore-) Windparks mit mindestens einer Windkraftanlage installiert. Eine Windkraftanlage ist eingerichtet, die Windenergie, also die kinetische Energie bewegter Luft, in elektrische Energie zu wandeln.

In der Regel weist eine Windkraftanlage einen Turm und eine auf dem Turm angeordnete Gondel auf. Mittels eines Rotors, eines Generators und dergleichen wird die Windenergie in elektrische Energie gewandelt.

Eine Windkraftanlage ist nach der Installation und während des Betriebs der Windkraftanlage hohen (mechanischen) Belastungen ausgesetzt. Diese führen zu einer endlichen technischen Lebensdauer einer jeden Windkraftanlage. Grund sind insbesondere Ermüdungserscheinungen an bestimmten (nicht-reparablen bzw. nicht-austauschbaren) Bauteilen eine Windkraftanlage. Diese Bauteile werden auch als so genannte tragende Strukturkomponenten (z.B. Turm, Gondel, Fundament etc.) bezeichnet.

Derartige Strukturkomponenten können in der Praxis insbesondere nicht durch Ersatzteile ausgetauscht oder repariert werden. Dies meint insbesondere, dass ein/e Austausch/Reparatur eines derartigen Bauteils im Vergleich zu einer Neuinstallation aus Kostengründen in der Praxis nicht durchgeführt wird, auch wenn diese theoretisch möglich wäre.

Grundsätzlich wird das Ziel verfolgt, eine Windkraftanlage möglichst bis zum Erreichen des Endes der tatsächlichen technischen Lebensdauer der Windkraftanlage zu betreiben. Das Ende der technischen Lebensdauer ist insbesondere das Ende der sicheren Betriebszeit einer Windkraftanlage. Die tatsächliche Lebensdauer meint insbesondere den Zeitpunkt, an dem der tatsächlich vorliegende Anlagenzustand der Windkraftanlage mindestens einen bestimmten Anlagenzustandsgrenzwert erreicht oder unter- bzw. überschreitet. Der bestimmte Anlagenzustandsgrenzwert kann vorgegeben sein. Der bestimmte Anlagenzustandsgrenzwert kann insbesondere einen Zustand der Windkraftanlage (insbesondere von einem der Strukturkomponenten der Windkraftanlage) angeben, ab der das Risiko einer Beschädigung (insbesondere eines Ermüdungsschadens) eines der nicht-reparablen bzw. nicht-austauschbaren Bauteile der Windkraftanlage nicht mehr akzeptabel ist.

Anders ausgedrückt, kann ein Betreiben einer Windkraftanlage bei einem Erreichen des mindestens einen bestimmten Anlagenzustandsgrenzwerts nicht mehr zulässig sein.

Daher besteht bei der ständig wachsenden Anzahl von Windkraftanlagen bzw. Windparks grundsätzlich der Bedarf, die technische Lebensdauer, auch als Restnutzungsdauer bzw. "Remaining Useful Life" (RUL) bezeichnet, einer sich im Betrieb befindlichen Windkraftanlage mit einer möglichst hohen Genauigkeit zu bestimmen, also insbesondere vorherzusagen. Die RUL von Windkraftanlagen ist eine wichtige Kennzahl bei der Bewertung eines Windparks.

Die RUL kann bestimmt werden durch die bis zum Bewertungszeitpunkt in die Struktur der Windkraftanlage, also die mindestens eine Strukturkomponente der Windkraftanlage, eingebrachten Ermüdungsschäden (vgl. augenblicklicher Anlagenzustand) im Vergleich zu den zulässigen Beschädigungen (beispielsweise definiert durch den mindestens einen Anlagenzustandsgrenzwert der mindestens einen Strukturkomponente).

Es versteht sich, dass bei den zulässigen Beschädigungen entsprechende Sicherheitsfaktoren umfasst sein können. Anders ausgedrückt, kann der tatsächliche Anlagenzustand der mindestens einen Strukturkomponente im Vergleich zu einem zulässigen Anlagenzustand ermittelt werden, also mit mindestens einem bestimmten Anlagenzustandsgrenzwert verglichen werden.

Aus dem Stand der Technik ist es bekannt, die Schädigung einer Windkraftanlage aus den Windkraftanlagenlasten bzw. -belastungen auf der Grundlage eines geeigneten Schädigungsmodells für die Windkraftanlage durch eine Rechenvorrichtung zu berechnen. Insbesondere kann ein Modell für jedes betrachtete Bauteil bzw. jede betrachtete Strukturkomponente verwendet werden. Der genaueste Lösungsansatz wäre daher die kontinuierliche Messung der Bauteilbelastungen an sämtlichen Windkraftanlagen über die gesamte Lebensdauer der jeweiligen Windkraftanlage und dann die Vorhersage anhand des Schädigungsmodells. Aufgrund der enormen Kosten, die mit diesem Ansatz einhergehen, bei jeder Windkraftanlage derartige Messungen über einen Zeitraum von zumindest drei Monaten vorzunehmen, vorzugsweise zumindest sechs Monaten, ist dieser Ansatz in der Praxis schlicht nicht umsetzbar.

Beim Stand der Technik werden daher Simulationsmodelle eingesetzt, um die RUL einer Windkraftanlage abzuschätzen. So werden beim Stand der Technik so genannte aero-elastische Simulationsmodelle zur Abschätzung der Komponentenlasten bzw. Komponentenbelastungen einer Windkraftanlage eingesetzt. Mit einem Simulationsmodell wird insbesondere ein bestimmter Anlagentyp abgebildet. Diese Abbildung ist jedoch mit einem hohen Aufwand verbunden. Die Simulationsmodelle werden dann mit verfügbaren Betriebsdaten einer Windkraftanlage kalibriert und validiert, wie z. B. Leistungskurve, Schubkurve, Fundamentlasten unter Auslegungsbedingungen etc.

Belastungsmessung bzw. Lastmessungen im Betrieb einer Windkraftanlage werden in der Regel nicht durchgeführt. Die Unsicherheit eines solchen Simulationsmodells ist daher in der Regel sehr hoch. Entsprechend der hohen Unsicherheit werden entsprechend hohe Sicherheitsfaktoren berücksichtigt, so dass es zu sehr konservativen RUL-Ergebnissen kommt. Die hohe Unsicherheit und der ohnehin schon hohe Aufwand kann beim Stand der Technik jedoch nur durch den Einsatz erheblicher Ressourcen verbessert werden.

Eine in der Praxis nur selten angewandte Möglichkeit, die Unsicherheit zumindest etwas zu reduzieren, basiert auf einer Abschätzung der auf eine Windkraftanlage wirkenden Lasten anhand von Betriebsdaten der Windkraftanlage, insbesonderein Form von SCADA (Supervisory Control and Data Acquisition) Betriebsdaten der Windkraftanlage.

Problematisch bei einem Abschätzungsprozess der Schadensakkumulation, der auf der Ableitung von Lasten aus SCADA Betriebsdaten basiert, ist, dass dieser in einem hohen Maße nicht-linear ist. Bei den bekannten Simulationsmodellen führt diese Problematik regelmäßig zu sehr unzuverlässigen Ergebnissen.

Zusammenfassend kann festgestellt werden, dass die Abschätzung einer Restnutzungsdauer einer Windkraftanlage im Stand der Technik sehr aufwendig ist und gleichzeitig eine hohe Unsicherheit aufweist.

US 2021/123416 A1 ist ein relevantes Beispiel für den Stand der Technik.

Daher liegt der Anmeldung die Aufgabe zugrunde, eine Möglichkeit zur Bestimmung einer Restnutzungsdauer einer Windkraftanlage bereitzustellen, welche eine zuverlässigere Bestimmung der Restnutzungsdauer mit einem insbesondere geringeren Aufwand ermöglicht.

Die Aufgabe wird gemäß einem ersten Aspekt der Anmeldung gelöst durch ein Verfahren nach Anspruch 1, insbesondere ein computer-implementiertes Verfahren, zum Trainieren eines Machine-Learning-Modells, das zum Bestimmen einer Restnutzungsdauer einer weiteren Windkraftanlage verwendet wird. Das Verfahren umfasst:
- Bereitstellen einer Vielzahl von (zeitabhängigen) Betriebsdatensätzen einer Referenz-Windkraftanlage,
- Bereitstellen einer Vielzahl von (zeitabhängigen) Belastungsdatensätze der Referenz-Windkraftanlage, wobei ein Belastungsdatensatz zumindest auf mindestens einem an der Referenz-Windkraftanlage gemessenen Belastungsparameter basiert, und
- Generieren einer Vielzahl von Windkraft-Trainingsdatensätzen zum Trainieren eines Machine-Learning-Modells durch synchronisiertes Zuordnen eines jeweiligen Betriebsdatensatzes zu einem jeweiligen Belastungsdatensatz.

Die Aufgabe wird gemäß einem weiteren Aspekt der Anmeldung gelöst durch ein Verfahren nach Anspruch 12 zum Verwenden eines Machine-Learning-Modells, welches gemäß dem beschriebenen Verfahren trainiert wurde. Das Verfahren umfasst:
- Eingeben mindestens eines Betriebsdatensatzes der weiteren Windkraftanlage in das (trainierte) Machine-Learning-Modell, und
- Ausgeben, durch das (trainierte) Machine-Learning-Modell, mindestens eines Anlagenzustandsdatensatzes.

Das Verfahren dient insbesondere zum Bestimmen des augenblicklichen und insbesondere tatsächlichen (strukturellen und mechanischen) Anlagenzustands mindestens einer Strukturkomponente der weiteren Windkraftanlage. Basierend auf diesem (mindestens einen) Anlagenzustand kann dann insbesondere eine Restnutzungsdauer der weiteren Windkraftanlange bestimmt werden, insbesondere mit einer erhöhten Genauigkeit vorhergesagt werden.

Im Gegensatz zum Stand der Technik wird anmeldungsgemäß eine Möglichkeit zur Bestimmung eines augenblicklichen Anlagenzustands einer Windkraftanlage, und basierend hierauf einer Restnutzungsdauer der Windkraftanlage bereitgestellt, welche eine zuverlässigere Bestimmung der Restnutzungsdauer mit einem insbesondere geringeren Aufwand ermöglicht, indem ein Machine-Learning-Modell mit Trainingsdatensätzen trainiert wird, welche jeweils synchronisierte Betriebsdaten und Belastungsdaten einer Referenz-Windkraftanlage enthalten, und indem das trainierte Machine-Learning-Modell dann zum Bestimmen des Anlagenzustands einer weiteren Windkraftanlage verwendbar ist. Basierend auf diesem bestimmten Anlagenzustand kann dann wiederum die Restnutzungsdauer der weiteren Windkraftanlage (beispielweise in herkömmlicher Weise) bestimmt werden.

Anmeldungsgemäß wird ein Verfahren zum Trainieren eines Machine-Learning-Modells bereitgestellt. Anders ausgedrückt, kann ein Machine-Learning-Modell durch das anmeldungsgemäße Verfahren angelernt werden. Das trainierte Machine-Learning-Modell ist anschließend insbesondere mittelbar verwendbar zum Bestimmen einer Restnutzungsdauer einer Windkraftanlage.

Das Machine-Learning-Modell (auch als maschinelles Lernmodell oder Maschinenlernmodell bezeichnet) kann vorzugsweise ein künstliches neuronales Netz sein und/oder umfassen.

Ein künstliches neuronales Netz umfasst künstliche Neuronen. Ein derartiges Neuron ist insbesondere eingerichtet zum Erhalten jeweils mindestens einer Eingabe von mindestens zwei weiteren künstlichen Neuronen. Die mindestens zwei Eingaben können jeweils über mindestens eine Verbindung mit einer bestimmten (trainierbaren) Gewichtung erhalten werden.

Ein künstliches Neuron kann ferner eingerichtet sein, die mindestens eine Eingabe zu mindestens einer Ausgabe zu integrieren, indem das Neuron zum Beispiel mindestens zwei erhaltene Eingaben summiert und zum Beispiel eine Funktion, wie beispielsweise eine Sigmoidtransformation, auf die Summe anwendet, um eine Ausgabe zu generieren. Die Ausgabe eines künstlichen Neurons, insbesondere multipliziert mit einer Verbindungsgewichtung einer weiteren Verbindung zu einem weiteren Neuron, kann eine Eingabe für dieses weitere Neuron bilden.

Anmeldungsgemäß werden für mindestens eine Referenz-Windkraftanlage eine Vielzahl von Betriebsdatensätzen dieser mindestens einen Referenz-Windkraftanlage und eine Vielzahl von (mechanischen und/oder strukturellen) Belastungsdatensätzen dieser mindestens einen Referenz-Windkraftanlage bereitgestellt.

Wie bereits beschrieben wurde, kann ein aktueller Anlagenzustand einer Strukturkomponente aus Belastungsparametern bzw. den Belastungsparameterwerten, die an einer Windkraftanlage während einer Messzeitdauer gemessen werden, bestimmt werden, insbesondere geschätzt werden. Eine Bestimmung des augenblicklichen Anlagenzustands, ausschließlich basierend auf den während einer Erfassungszeitdauer erfassten Betriebsdaten (vorzugsweise SCADA-Betriebsdaten), ist hingegen gemäß dem Stand der Technik nicht möglich.

Anmeldungsgemäß ist erkannt worden, dass grundsätzlich ein Zusammenhang zwischen den Belastungsparameterwerten und den Betriebsdatenwerten besteht. Insbesondere ist erkannt worden, dass durch spezielle Trainingsdatensätze, welche sowohl Belastungsparameterwerte als auch Betriebsdatenwerte einer (Referenz-) Windkraftanlage enthalten, ein Machine-Learning-Modell derart trainiert werden kann, dass dieser Zusammenhang bzw. Zusammenhänge detektiert und in dem Machine-Learning-Modell abgebildet werden können. Insbesondere können durch ein Machine-Learning-Modell Muster zwischen Belastungsparameterwerten und Betriebsdatenwerten erkannt werden. Diese können in dem Machine-Learning-Modell abgebildet werden.

Hierdurch ist es anschließend möglich, die Restnutzungsdauer einer weiteren Windkraftanlage (zumindest mittelbar) unter Verwendung (ausschließlich) der Betriebsdaten dieser weiteren Windkraftanlage zu bestimmen, insbesondere zu schätzen. So kann mindestens ein Betriebsdatensatz, vorzugsweise eine Vielzahl von Betriebsdatensätzen, einer weiteren Windkraftanlage in das Machine-Learning-Modell eingegeben werden, also insbesondere als Eingabe(n) zur Verfügung gestellt werden. Als Ausgabe kann zumindest ein Anlagenzustandsdatensatz durch das Machine-Learning-Modell bereitgestellt werden, der bereits eine (geschätzte) Restnutzungsdauer oder zumindest mindestens einen Anlagenzustandsindikator (z.B. mindestens einen Ermüdungsbelastungsindikator) enthalten kann, aus dem die Restnutzungsdauer bestimmbar ist, insbesondere in konventioneller Weise abschätzbar ist.

Wie bereits beschrieben wurde, werden zum Bilden von einer Vielzahl von Trainingsdatensätzen eine Vielzahl von Betriebsdatensätzen und eine Vielzahl von Belastungsdatensätzen einer Referenz-Windkraftanlage bereitgestellt. Eine Referenz-Windkraftanlage meint insbesondere eine im Betrieb befindliche Windkraftanlage insbesondere eines Windparks, deren Betriebsparameterwerte und Belastungsparameterwerte erfasst werden, um Trainingsdatensätze zu bilden. Eine Referenz-Windkraftanlage kann in beliebiger Weise aus einer Mehrzahl von Windkraftanlagen eines Windparks ausgewählt werden.

Ein Betriebsdatensatz enthält mindestens einen betriebsbezogenen Parameterwert der Referenz-Windkraftanlage. Vorzugsweise enthält ein Betriebsdatensatz eine Vielzahl dieser Betriebsparameter(-werte). Ein Betriebsparameter meint insbesondere einen während des Betriebs einer Windkraftanlage (für den Betrieb der Windkraftanlage) erfassten Betriebsparameter der Windkraftanlage, der sich auf den Betrieb der Windkraftanlage bezieht. Vorzugweise ist ein bereitgestellter Betriebsdatensatz der Referenz-Windkraftanlage ein SCADA-Betriebsdatensatz der Referenz-Windkraftanlage bzw. ein Betriebsdatensatz der Referenz-Windkraftanlage mit mindestens einem SCADA-Betriebsparameter der Referenz-Windkraftanlage.

Ein Belastungsdatensatz, insbesondere in Form eines Ermüdungsbelastungsdatensatz, enthält mindestens einen strukturellen und/oder mechanischen Belastungsparameter bzw. Belastungsparameterwert einer (zuvor beschriebenen) Strukturkomponente der Referenz-Windkraftanlage.

Insbesondere werden während des Betriebs einer Referenz-Windkraftanlage gleichzeitig Belastungsparameterwerte mindestens eines Belastungsparameters der Referenz-Windkraftanlage und Betriebsparameterwerte mindestens eines Betriebsparameters der Referenz-Windkraftanlage erfasst.

Aus den erfassten Betriebsparameterwerten des mindestens einen Betriebsparameters kann dann eine Vielzahl von zeitabhängigen Betriebsdatensätzen gebildet werden, insbesondere in herkömmlicher Weise. Jedem Betriebsdatensatz kann insbesondere eine Betriebsdatenzeitdauer (z.B. ein Zeitstempel) zugeordnet sein, die sich auf den Messzeitraum der Messung bzw. Erfassung des mindestens einen Betriebsparameters bezieht. Beispielsweise kann eine Betriebsdatenzeitdauer einen Anfangszeitpunkt (gebildet insbesondere durch Datum und Uhrzeit (z.B. 1.1.21, 1:00 Uhr)), eine Zeitlänge (vorzugsweise zwischen 5 und 30 min, insbesondere (in herkömmlicher Weise) 10 min) und einen Endzeitpunkt (gebildet insbesondere durch Datum und Uhrzeit (z.B. 1.1.21, 1:10 Uhr)) umfassen.

Aus den erfassten Belastungsparameterwerten des mindestens einen Belastungsparameters kann dann eine Vielzahl von zeitabhängigen Belastungsdatensätzen gebildet werden. Um insbesondere ein (zeitlich) synchronisiertes Zuordnen von Betriebsdatensätzen zu Belastungsdatensätzen zu ermöglichen, kann sich das Bilden von Belastungsdatensätzen vorzugsweise an die Bildung der Betriebsdatensätze (beispielsweise ohnehin durch ein SCADA-System vorgegeben) orientieren bzw. hierzu korrespondieren.

Jedem Belastungsdatensatz kann insbesondere eine Belastungsdatenzeitdauer (z.B. ein Zeitstempel) zugeordnet sein, die sich auf den Messzeitraum der Messung bzw. Erfassung des mindestens einen Belastungsparameters bezieht. Diese Belastungsdatenzeitdauer kann entsprechend der Betriebsdatenzeitdauer gewählt sein. Beispielsweise kann eine Belastungsdatenzeitdauer einen Anfangszeitpunkt (gebildet insbesondere durch Datum und Uhrzeit (z.B. 1.1.21, 1:00 Uhr)), eine Zeitlänge (vorzugsweise zwischen 5 und 30 min, insbesondere (in herkömmlicher Weise) 10 min) und einen Endzeitpunkt (gebildet insbesondere durch Datum und Uhrzeit (z.B. 1.1.21, 1:10 Uhr)) umfassen.

Zum Generieren von Windkraft-Trainingsdatensätzen erfolgt anmeldungsgemäß ein synchrones bzw. synchronisiertes Zuordnen von Belastungsdatensätzen zu Betriebsdatensätzen, insbesondere abhängig von der jeweils zugeordneten Belastungsdatenzeitdauer bzw. Betriebsdatenzeitdauer. Anders ausgedrückt, kann insbesondere ein zeitlich synchrones bzw. zeitlich synchronisiertes Zuordnen von zeitlich synchronen Datensätzen, also Datensätzen mit gleicher Zeitabhängigkeit (z.B. gleichem Zeitstempel), zueinander erfolgen.

Beispielsweise wird ein Betriebsdatensatz mit Anfangszeitpunkt t_{A1} (z.B. 1.1.21, 1:00 Uhr), Zeitlänge T_{L1} (z.B. 10 min) und einem Endzeitpunt t_{E1} (z.B. 1.1.21, 1:10 Uhr) einen Belastungsdatensatz mit einem entsprechenden Anfangszeitpunkt t_{A1} (z.B. 1.1.21, 1:00 Uhr), einer entsprechenden Zeitlänge T_{L1} (z.B. 10 min) und einem entsprechenden Endzeitpunt t_{E1} (z.B. 1.1.21, 1:10 Uhr) zugeordnet.

Durch die anmeldungsgemäße synchrone Zuordnung wird insbesondere ein Windkraft-Trainingsdatensatz gebildet, der (stets) (genau) einen Belastungsdatensatz (bzw. die entsprechenden Parameterwerte) und (genau) einen Betriebsdatensatz (bzw. die entsprechenden Parameterwerte) enthält bzw. hieraus gebildet ist.

Gemäß einer Ausführungsform des anmeldungsgemäßen Verfahrens kann das Machine-Learning-Modell (in herkömmlicher Weise) mit den generierten Windkraft-Trainingsdatensätzen während einer Trainingszeitdauer trainiert werden. Anders ausgedrückt, werden dem Machine-Learning-Modell die generierten Windkraft-Trainingsdatensätzen bereitgestellt, um insbesondere angelernt zu werden.

Gemäß einer weiteren Ausführungsform des anmeldungsgemäßen Verfahrens kann ein Teil (zum Beispiel zwischen 10 % und 30 %, vorzugsweise zwischen 15 % und 25 %) der generierten Windkraft-Trainingsdatensätzen als Validierungsdatensätze während einer Trainingszeitdauer verwendet werden. Insbesondere kann der Trainingserfolg eines Machine-Learning-Modells mittels Validierungsdatensätzen überprüft werden, also insbesondere validiert werden. Die Validierungsdatensätze können vorzugsweise zufällig aus den generierten Windkraft-Trainingsdatensätzen ausgewählt werden.

Gemäß einer bevorzugten Ausführungsform des anmeldungsgemäßen Verfahrens kann ein bereitgestellter Betriebsdatensatz mindestens einen Betriebsparameter (bzw. einen erfassten Betriebsparameterwert) der Referenz-Windkraftanlage enthalten. Der mindestens eine Betriebsparameter kann ausgewählt sein aus der Gruppe, umfassend:
- Turmkopfbeschleunigung (auch als tower top acceleration bezeichnet),
- Pitchwinkel (auch als pitch angle bezeichnet),
- Pitchgeschwindigkeit (also insbesondere die Geschwindigkeit, mit der das Blatt verstellt wird)
- Rotorgeschwindigkeit (auch als rotor speed bezeichnet),
- Elektrische Leistung, insbesondere elektrische Wirkleistung (auch als active power bezeichnet),
- Gondelwindgeschwindigkeit(en) (auch als nacelle windspeed(s) bezeichnet).

Der Betriebsdatensatz kann nur einen der vorgenannten Betriebsparameter, vorzugsweise zwei der vorgenannten Betriebsparameter umfassen, besonders bevorzugt sämtliche dieser Betriebsparameter. Es versteht sich, dass ggf. auch zusätzliche, hier nicht explizit genannte Betriebsparameter alternativ oder zusätzlich vorgesehen sein können. Insbesondere kann mindestens ein Sensormodul, insbesondere eine Mehrzahl von (unterschiedlichen) Sensormodulen, vorgesehen sein, um den mindestens einen Betriebsparameter bzw. dessen Betriebsparameterwerte (vorzugsweise kontinuierlich) zu messen. Die gemessen Betriebsparameterwerte und/oder -signale eines Betriebsparameters können dann, beispielsweise durch ein SCADA-Steuermodul, bereitgestellt werden.

Vorzugsweise weist ein Betriebsdatensatz eine Betriebsdatenzeitdauer auf, wie zuvor beschrieben wurde.

Gemäß einer weiteren Ausführungsform des anmeldungsgemäßen Verfahrens kann ein Betriebsdatensatz als Betriebsparameterwert eines Betriebsparameters mindestens einen Betriebsparameterwert umfassen, der ausgewählt ist aus der Gruppe, umfassend:
- maximaler Betriebsparameterwert erfasst während (der Zeitlänge) der Betriebsdatenzeitdauer des Betriebsdatensatzes,
- minimaler Betriebsparameterwert erfasst während (der Zeitlänge) der Betriebsdatenzeitdauer des Betriebsdatensatzes,
- Betriebsparametermittelwert ermittelt aus den während (der Zeitlänge) der Betriebsdatenzeitdauer des Betriebsdatensatzes erfassten Betriebsparameterwerten,
- Standardabweichung ermittelt aus den während (der Zeitlänge) der Betriebsdatenzeitdauer des Betriebsdatensatzes erfassten Betriebsparameterwerten.

Ein Betriebsdatensatz kann für den mindestens einen Betriebsparameter zwei der genannten Betriebsparameterwerte umfassen, vorzugsweise sämtliche dieser Betriebsparameterwerte. Hierdurch können qualitativ höherwertige Trainingsdatensätze gebildet werden.

Ein bevorzugtes Beispiel eines Betriebsdatensatzes gemäß der vorliegenden Anmeldung ist in Tabelle 1 angegeben.

**Tabelle 1**

| **Betriebsparameter** | **Betriebsparameterwert** |
|---|---|
| Turmkopfbeschleunigung | - max. Beschleunigungswert |
| | - min. Beschleunigungswert |
| | - gemittelter Beschleunigungswert |
| | - Standardabweichung der Beschleunigungswerte |
| Pitchwinkel | - max. Winkelwert |
| | - min. Winkelwert |
| | - gemittelter Winkelwert |
| | - Standardabweichung der Winkelwerte |
| Rotorgeschwindigkeit | - max. Geschwindigkeitswert |
| | - min. Geschwindigkeitswert |
| | - gemittelter Geschwindigkeitswert |
| | - Standardabweichung der Geschwindigkeitswerte |
| Elektrische Leistung, | - max. Leistungswert |
| insbesondere elektrische | - min. Leistungswert |
| Wirkleistung | - gemittelter Leistungswert |
| | - Standardabweichung der Leistungswerte |
| Gondelwindgeschwindigkeit | - max. Geschwindigkeitswert |
| | - min. Geschwindigkeitswert |
| | - gemittelter Geschwindigkeitswert |
| | - Standardabweichung der Geschwindigkeitswerte |

Die vorbeschriebenen bevorzugten Betriebsparameter beziehen sich insbesondere auf Onshore- Windkraftanlagen.

Anmeldungsgemäß ist erkannt worden, dass bei einer Offshore-Windkraftanlage ein Betriebsdatensatz mindestens einen weiteren (offshore-bezogenen)

Betriebsparameter umfassen sollte bzw. ein weiterer Betriebsdatensatz mit mindestens einem weiteren (offshore-bezogenen) Betriebsparameter bereitgestellt werden sollte. Insbesondere ist anmeldungsgemäß erkannt worden, dass bei einer Offshore-Windkraftanlage ein Betriebsdatensatz (oder ein weiterer Offshore-Betriebsdatensatz, der entsprechend der beschriebenen synchronen Zuordnung zusätzlich zugeordnet werden kann) mindestens einen Gewässerzustandsparameter enthalten kann. Ein Gewässerzustandsparameter meint insbesondere einen Parameter, der den Zustand des die Offshore-Windkraftanlage umgebenden Gewässers (insbesondere ein Meer) angibt.

Der mindestens eine Gewässerzustandsparameter ist vorzugsweise ein hydrodynamischer Parameter. Der mindestens eine Gewässerzustandsparameter kann ein Wellenparameter (z.B. Wellenhöhe, Wellenrichtung und/oder Wellenfrequenz) und/oder ein Strömungsparameter (z.B. Strömungsgeschwindigkeit und/oder Strömungsrichtung) sein.

Ein Beispiel eines (Offshore-)Betriebsdatensatzes gemäß der vorliegenden Anmeldung mit offshore-bezogenen Betriebsparametern ist in Tabelle 2 angegeben.

**Tabelle 2**

| **Betriebsparameter** | **Betriebsparameterwert** |
|---|---|
| Wellenhöhe | - max. Höhenwert |
| | - min. Höhenwert |
| | - gemittelter Höhenwert |
| | - Standardabweichung der Höhenwerte |
| Wellenfrequenz | - max. Frequenzwert |
| | - min. Frequenzwert |
| | - gemittelter Frequenzwert |
| | - Standardabweichung der Frequenzwert |
| Strömungsgeschwindigkeit und/oder Wellengeschwindigkeit | - max. Geschwindigkeitswert |
| | - min. Geschwindigkeitswert |
| | - gemittelter Geschwindigkeitswert |
| | - Standardabweichung der Geschwindigkeitswerte |

Es versteht sich, dass die Tabelle 1 und die Tabelle 2 miteinander kombinierbar sind.

Gemäß einer weiteren bevorzugten Ausführungsform des anmeldungsgemäßen Verfahrens kann eine Vorverarbeitung der bereitgestellten Betriebsparameterwerte und/oder Belastungsparameterwerte und/oder Windkraft-Trainingsdatenparameterwerte erfolgen. Insbesondere kann die Qualität der Trainingsdatensätze verbessert werden, wenn die Qualität der genannten Werte verbessert wird (z.B. fehlerhafte Werte aufgrund von Messfehler vorab identifiziert werden und dann insbesondere unbeachtlich bleiben oder mit geeigneten Mitteln durch passendere Werte ersetzt werden).

Eine Vorverarbeitung kann insbesondere mindestens eine der nachfolgenden Maßnahmen umfassen:
- Entfernen ungültiger Betriebsparameterwerte und/oder Belastungsparameterwert und/oder Windkraft-Trainingsdatenparameterwerte (bzw. entsprechende Ausreißer). Dies erfolgt vorzugsweise über direkte Indikatoren für den Windkraftanlagenzustand (Windkraftanlagenzustandssignal in SCADA, falls vorhanden) und/oder indirekt über das Leistungssignal in SCADA in Verbindung mit der Leistungskurvenspezifikation.
- Extrahieren von einem geeigneten Satz von Merkmalen/Parameterwerten, indem eine Kollinearität der Merkmalen/Parameterwerten berücksichtigt wird. Dies kann durch die Berechnung der Korrelationen der Parameter untereinander und Vergleich mit einer zulässigen Obergrenze geschehen.
- Alternativ können alle Merkmalen/Parameterwerten (mit Ausnahme der stark kollinearen) beibehalten und eine maschinelle Lernmethode mit impliziter Merkmals-Auswahl verwendet werden (z. B. Bayes'sches LASSO (vgl. z.B. Trevor Park & George Casella (2008), The Bayesian Lasso, Journal of the American Statistical Association) oder MARS). Dies kann beispielsweise unter Nutzung einer Regressions-Technik erfolgen, wie eine Mulitvariante Regression (vgl. z.B. Friedman, J.H. (1991) "Multivariate Adaptive Regression Splines").
- Skalierung der Betriebsparameterwerte und/oder Belastungsparameterwert und/oder Windkraft-Trainingsdatenparameterwerte, z. B. Standardisierung der Betriebsparameterwerte mit Erwartungswert Null (zero mean) und z.B. konstanter Varianz (üblicherweise gleich 1).

Andere Transformationen sind auch denkbar. Ziel ist es insbesondere immer, dass die Variablen nach der Transformation näherungsweise standardnormalverteilt sind.

Gemäß einer weiteren bevorzugten Ausführungsform des anmeldungsgemäßen Verfahrens kann ein bereitgestellter Belastungsdatensatz auf mindestens einem gemessenen Belastungsparameter der Referenz-Windkraftanlage basieren. Basierend meint insbesondere, dass der Belastungsdatensatz nicht die (gemessenen) Belastungsparameterwerte des mindestens einen Belastungsparameter unmittelbar umfasst, sondern hieraus abgeleitete bzw. bestimmte Ermüdungsbelastungsindikatoren bzw. -indikatorwerte.

Der mindestens eine Belastungsparameter kann vorzugsweise ausgewählt sein, aus der Gruppe, umfassend:
- Blattfußbelastungsparameter (auch als blade root load bezeichnet),
- Rotorbelastungsparameter (auch als rotor load bezeichnet),
- Turmbelastungsparameter (auch als tower load bezeichnet),
- Turmtorsionsparameter (auch als tower torsion bezeichnet),
- Turmkopfmomentparameter (auch als tower top moment bezeichnet).

Der Belastungsdatensatz kann auf nur einem der vorgenannten Belastungsparameter basieren. Der Belastungsdatensatz kann auf zwei der vorgenannten Belastungsparameter basieren, vorzugsweise auf sämtlichen dieser Belastungsparameter.

Der mindestens eine Blattfußbelastungsparameter kann insbesondere ein Blattbiegungsparameter (auch als flap bending bezeichnet) und/oder ein Kantenbiegungsparameter (auch als edge bending bezeichnet) sein. Darüber hinaus kann der mindestens eine Rotorbelastungsparameter ein Kippmomentparameter (auch als tilt moment bezeichnet), ein Giermoment (auch als yaw moment bezeichnet) und/oder ein Rotordrehmoment (auch als rotor torque bezeichnet) sein. Der mindestens eine Turmbelastungsparameter kann ein Turmfußbiegungsparameter (in zwei Richtungen) sein. Der mindestens eine Turmkopfmomentparameter kann Kippmomentparameter (auch als tilt moment bezeichnet), ein Giermoment (auch als yaw moment bezeichnet) und/oder ein Rollmomentparameter (auch als roll moment bezeichnet) sein.

Aus den genannten Belastungsparametern kann ein Anlagenzustand bzw. ein Bauteilzustand eines bestimmten Bauteils, insbesondere einer Strukturkomponente, der Windkraftanlage bestimmt werden.

Die Belastungsparameterwerte eines Belastungsparameters können durch mindestens einen Belastungssensor einer Sensoranordnung (kontinuierlich) gemessen und insbesondere bereitgestellt werden. Insbesondere kann ein Messen des mindestens einen Belastungssensors mit einer hohen Auflösung (z.B. 20 Hz) erfolgen. Eine Zwischenspeicherung der gemessenen Werte für eine weitere Verarbeitung ist möglich. Der mindestens eine Belastungssensor kann hierzu an einer geeigneten Position in bzw. an der Windkraftanlage angeordnet werden.

Gemäß einer besonders bevorzugten Ausführungsform des anmeldungsgemäßen Verfahrens kann das Verfahren ferner umfassen:
- Messen des mindestens einen Belastungsparameters der Referenz-Windkraftanlage,
- wobei das Messen des mindestens einen Belastungsparameters insbesondere entsprechend dem Standard IEC 61400-13 [2] erfolgt.

Insbesondere können zumindest die in Abschnitt 3.3.2 des Standards IEC 61400-13 [2] genannten (Schlüssel-) Belastungsparameter gemessen werden, insbesondere entsprechend dem genannten Standard.

Gemäß einer weiteren Ausführungsform des anmeldungsgemäßen Verfahrens kann als Belastungsparameterwert eines Belastungsparameters ein Belastungsparameterwert vorgesehen sein, der ausgewählt ist aus der Gruppe, umfassend:
- maximaler Belastungsparameterwert gemessen während (der Zeitlänge) der Belastungsdatenzeitdauer ,
- minimaler Betriebsparameterwert gemessen während (der Zeitlänge) der Belastungsdatenzeitdauer ,
- Belastungsparametermittelwert ermittelt aus den während (der Zeitlänge) der Belastungsdatenzeitdauer gemessenen Belastungsparameterwerten,
- Standardabweichung ermittelt aus den während (der Zeitlänge) der Belastungsdatenzeitdauer gemessenen Belastungsparameterwerten.

Ein Belastungsdatensatz kann auf mindestens zwei der genannten Belastungsparameterwerte basieren, vorzugsweise auf sämtlichen dieser Belastungsparameterwerte. Hierdurch können qualitativ höherwertige Trainingsdatensätze gebildet werden.

Ein bevorzugtes Beispiel von Belastungsparametern und Belastungsparameterwerten, auf denen ein Belastungsdatensatz basieren kann, ist insbesondere in der Tabelle 3 angegeben.

**Tabelle 3**

| **Belastungsparameter** | **Belastungsparameterwert** |
|---|---|
| Blattbiegungsparameter | - max. Biegungswert |
| | - min. Biegungswert |
| | - gemittelter Biegungswert |
| | - Standardabweichung der Biegungswerte |
| Kantenbiegungsparameter | - max. Biegungswert |
| | - min. Biegungswert |
| | - gemittelter Biegungswert |
| | - Standardabweichung der Biegungswerte |
| Rotor-Kippmomentparameter | - max. Momentwert |
| | - min. Momentwert |
| | - gemittelter Momentwert |
| | - Standardabweichung der Momentwerte |

Gemäß einer weiteren Ausführungsform des anmeldungsgemäßen Verfahrens kann das Verfahren ferner umfassen:
- Messen des mindestens einen Belastungsparameters der Referenz-Windkraftanlage während einer Messzeitdauer, und
- Erfassen der Betriebsdaten der Referenz-Windkraftanlage während der Messzeitdauer,
- wobei die Messzeitdauer insbesondere mindestens 3 Monate beträgt, vorzugsweise mindestens 6 Monate (und z.B. höchstens 36 Monaten).

Jedem gemessenen (digitalen) Belastungsparameterwert kann ein Zeitstempel des Messzeitpunkts zugeordnet sein. Dieser kann zum Bilden eines Belastungsdatensatzes und insbesondere zum zuvor beschriebenen synchronisierten Zuordnen (zumindest mittelbar) berücksichtigt werden.

Während einer Messzeitdauer kann kontinuierlich der mindestens eine Betriebsparameter jeweils erfasst und insbesondere gemessen werden. Beispielsweise kann eine Zwischenspeicherung der gemessenen Daten erfolgen.

Wie bereits beschrieben wurde, können entsprechende Datensätze gebildet und dann bereitgestellt werden, um insbesondere eine Vielzahl von Windkraft-Trainingsdatensätzen zum Trainieren eines Machine-Learning-Modells generieren zu können. Um eine ausreichende Anzahl von Trainingsdatensätzen (insbesondere unter einer angenommen Zeitlänge von 10 min für jeden Betriebsdatensatz (und Belastungsdatensatz) zu erhalten, kann die Messzeitdauer mindestens 3 Monate sein, vorzugsweise mindestens 6 Monate.

Beispielsweise können ca. 100.000 Windkraft-Trainingsdatensätze generiert werden. Vorzugsweise können hiervon ca. 20.000 Windkraft-Trainingsdatensätze als Validierungsdatensätze verwendet werden.

Gemäß einer weiteren Ausführungsform des anmeldungsgemäßen Verfahrens kann das Verfahren ferner umfassen:
- Bilden eines (zeitabhängigen) Belastungsdatensatzes durch Umwandeln des mindestens einen gemessenen Belastungsparameterwertes der Referenz-Windkraftanlage in mindestens einen Ermüdungsbelastungsindikator,
- wobei das Umwandeln insbesondere auf einer Rainflow Counting Methode basiert ((auch Rainflowzählverfahren genannt).

Wie bereits beschrieben wurde, kann ein Belastungsdatensatz auf mindestens einem gemessenen Belastungsparameterwert von mindestens einem Belastungsparameter der Referenz-Windkraftanlage basieren. Insbesondere kann ein Belastungsdatensatz auf mindestens einem umgewandelten Belastungsparameterwert basieren, also insbesondere den mindestens einen Ermüdungsbelastungsindikator enthalten.

Besonders bevorzugt kann ein Umwandeln des mindestens einen gemessenen Belastungsparameterwertes der Referenz-Windkraftanlage in mindestens einen Ermüdungsbelastungsindikator entsprechend dem Standard ASTM E1049 - 85 (2017) durchgeführt werden.

Um ein qualitativ hochwertiges Machine-Learning-Modell zu erhalten, ist anmeldungsgemäß erkannt worden, dass ein so genanntes Overfitting während des Trainingsvorgangs vermieden werden sollte. Dies meint insbesondere, dass beim Trainingsvorgang sichergestellt wird, dass das Machine-Learning-Modell nur solche Muster in den Trainingsdaten erkennt, die auch tatsächlich vorhanden sind, und nicht zufällig (einmalig) aufgetreten sind.

Daher schlägt die Anmeldung gemäß einer weiteren bevorzugten Ausführungsform des anmeldungsgemäßen Verfahrens vor, dass während der Trainingszeitdauer mindestens eine Regularisierungstechnik angewendet wird. Hierdurch kann das Risiko eines Overfittings zumindest reduziert werden.

Die mindestens eine Regularisierungstechnik kann insbesondere ausgewählt sein aus der Gruppe, umfassend:
- Lineare Bayes'sche Regression (auch als Bayesian linear regression bezeichnet),
- Bayes'sche Neuronales Netzwerk mit Concrete Dropout (auch als Bayesian neural network by concrete dropout bezeichnet) oder Bayesian by Variational Inference,
- Adaptive Bayes'sche Spline Regression (auch als Bayesian adaptive spline regression bezeichnet).

Derartige Regularisierungstechniken haben sich als besonders vorteilhaft gezeigt.

Gemäß einer weiteren Ausführungsform des anmeldungsgemäßen Verfahrens kann während der Trainingszeitdauer ein Modell zum Abschätzen der aleatorischen und/oder epistemischen Ungewissheiten angewendet werden.

Ferner kann beim Trainingsvorgang zum Beispiel eine sogenannte Verlustfunktion (auch als loss function bezeichnet) verwendet werden, um das maschinelle Lernmodell zumindest teilweise anhand der Ausgabe zu bewerten. Eine Verlustfunktion kann beispielsweise eine Metrik des Vergleichs der Ausgabe mit einer Referenzgröße enthalten. Eine Verlustfunktion kann zum Beispiel definiert werden, wenn eine Referenzausgabe für eine gegebene Eingabe bekannt ist. Beispielsweise kann die Verlustfunktion eine sogenannte "Gaussian negative log likelihood function" sein.

In einem Trainingsschritt des Trainingsvorgangs kann das Machine-Learning-Modell angepasst werden. Ein Anpassen kann insbesondere ein Ändern mindestens eines Parameters des Machine-Learning-Modells umfassen.

Ein Windkraft-Trainingsdatensatz kann vorzugsweise in Form von Textdaten vorliegen, woraus eine geeignete Darstellung bzw. Repräsentation erzeugt werden kann. Die erzeugte Darstellung kann z. B. aus einem Vektor, einer Matrix und/oder einem Tensor gebildet sein.

Wie bereits beschrieben wurde, kann das trainierte Machine-Learning-Modell verwendet werden, um den Anlagenzustand einer weiteren Windkraftanlage zu bestimmen, insbesondere mit einer hohen Genauigkeit zu schätzen.

Ein Machine-Learning-Modell kann zum Beispiel ein beliebiger Algorithmus sein, der eine Eingabe (vorliegend insbesondere mindestens ein Betriebsdatensatz, vorzugsweise eine Vielzahl von historischen und gespeicherten Betriebsdatensätzen einer weiteren Windkraftanlage) empfängt und eine Ausgabe (vorliegend insbesondere mindestens ein Anlagenzustandsdatensatz, vorzugsweise enthaltend mindestens einen Ermüdungsbelastungsindikator von mindestens einem Bauteil der weiteren Windkraftanlage) zurückgibt, wobei die Ausgabe sowohl von der Eingabe als auch von mindestens einem Parameter des maschinellen Lernmodells abhängig ist.

Wie beschrieben wurde, wird das Machine-Learning-Modell zuvor trainiert, um eine Beziehung zwischen Eingaben und Ausgaben zu lernen. Das trainierte Machine-Learning-Modell kann dann verwendet werden, um aus einer neuen Eingabe eine neue Ausgabe zu erzeugen.

Die Eingabe für das trainierte Machine-Learning-Modell sind vorliegend insbesondere Betriebsdatensätze, die für eine Eingabe vorzugsweise in einen Vektor, eine Matrix und/oder einen Tensor transformiert werden können.

Gemäß einer weiteren Ausführungsform des anmeldungsgemäßen Verfahrens kann die weitere Windkraftanlage ein Windkraftanlagentyp sein, der identisch ist zu dem Windkraftanlagentyp der Referenz-Windkraftanlage. Anders ausgedrückt, wenn die Referenz-Windkraftanlage vom Typ V1 ist, dann kann das trainierte Machine-Learning-Modell vorzugsweise verwendet werden, um den Anlagenzustand und insbesondere RUL von weiteren Windkraftanlagen gleichen oder ähnlichen Typs (also Typ V.x) zu bestimmen, insbesondere zu schätzen. Es versteht sich, dass das anmeldungsgemäß trainierte Machine-Learning-Modell auch bei ähnlichen Typen (beispielsweise mit einem Upgrade) noch akzeptable Ergebnisse liefern kann.

Alternativ oder zusätzlich können die weitere Windkraftanlage und die Referenz-Windkraftanlage von dem gleichen Windpark umfasst sein. Ein Windpark kann eine Vielzahl von Windkraftanlagen umfassen. Um den Anlagenzustand und insbesondere RUL von vorzugsweise sämtlichen Windkraftanlagen eines Windparks zu bestimmen, kann mindestens eine Windkraftanlage des Windparks (bei Varianten der Anmeldungen können auch mehr, beispielsweise zwei, ausgewählt werden) als Referenz-Windkraftanlage ausgewählt werden. Nach dem Training eines Machine-Learning-Modells, wie zuvor beschrieben wurde, kann der Anlagenzustand und insbesondere RUL von mindestens einer weiteren Windkraftanlage, vorzugsweise sämtlichen weiteren Windkraftanlagen, des Windparks unter Nutzung des trainierten Machine-Learning-Modells bestimmt werden.

Gemäß einer bevorzugten Ausführungsform des anmeldungsgemäßen Verfahrens kann das Verfahren ferner umfassen:
- Bestimmen der Restlaufzeit der weiteren Windkraftanlage, basierend auf dem mindestens einen Anlagenzustandsdatensatz der weiteren Windkraftanlage.

Wie bereits beschrieben wurde, kann die Restlaufzeit bzw. RUL der weiteren Windkraftanlage aus dem ausgegebenen Anlagenzustandsdatensatz mit einer hohen Genauigkeit abgeschätzt werden (insbesondere mit bereits bekannten Schätzverfahren).

Für einige Bauteile bzw. Strukturkomponenten einer Windkraftanlage, wie z. B. Stahlrohrtürme, kann die Schädigung (und damit die RUL) anhand von Strukturmodellen der Turmschale und der Schweißnähte (und dem Anlagenzustandsdatensatz) abgeschätzt werden. Dazu können beispielsweise Schweißdetails, Turmgeometrie (z.B. Dicken, Durchmesser) und Materialeigenschaften bekannt sein oder (konservativ) geschätzt werden.

Für Strukturkomponenten, wie z.B. Rotorblätter, Maschinenrahmen, Generatorgrundplatte und/oder Nabe, würde dies jedoch einen erheblichen Aufwand bedeuten, um Materialgüte und Geometrien zu ermitteln, FEM-Modelle zu erstellen und die Dauerfestigkeit zu berechnen. Ein solcher Ansatz ist nur dann sinnvoll, wenn detailliertere Informationen vom Turbinenhersteller eingeholt werden können oder wenn die Anzahl der Turbinen des betrachteten Typs groß genug ist.

Alternativ könnte es eine Option sein, zu versuchen, Referenz-/Auslegungslasten zu erhalten. Für den Turmfuß können solche Lasten in öffentlich zugänglichen Fundamentlastangaben gefunden werden; für andere Komponenten könnte eine Zusammenarbeit mit dem OEM unvermeidlich sein.

Eine Variante der weiteren Option könnte darin bestehen, aus den Messungen Windbedingungen auszuwählen, die nahe an den Auslegungsbedingungen der Turbine liegen, und die Referenzlasten aus den Messungen selbst zu nehmen und sie auf 20 Jahre zu extrapolieren.

Ein noch weiterer Aspekt der Anmeldung ist eine Rechenvorrichtung nach Anspruch 15, umfassend mindestens einen Datenspeicher, enthaltend Computerprogrammcode, und mindestens einen Prozessor, wobei der Programmcode und der Prozessor eingerichtet sind, derart, dass die Rechenvorrichtung veranlasst wird zum Generieren mindestens eines Anlagenzustandsdatensatzes, basierend auf mindestens einem bereitgestellten Betriebsdatensatz und zumindest teilweise unter der Verwendung eines Machine-Learning-Modells, welches nach einem der Ansprüche 1 bis 11 trainiert wurde.

Das Machine-Learning-Modell kann insbesondere in dem Datenspeicher gespeichert sein.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen.

Es gibt nun eine Vielzahl von Möglichkeiten, das anmeldungsgemäße Verfahren zum Trainieren eines Machine-Learning-Modells verwendbar zum Bestimmen einer Restnutzungsdauer einer Windkraftanlage, das anmeldungsgemäße Verfahren zum Verwenden eines trainierten Machine-Learning-Modells und die anmeldungsgemäße Rechenvorrichtung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Beispiels eines Windparks mit einer Mehrzahl von Windkraftanlagen,
- Fig. 2: ein Diagramm eines Ausführungsbeispiels eines Verfahrens gemäß der vorliegenden Anmeldung,
- Fig. 3: ein Diagramm eines weiteren Ausführungsbeispiels eines Verfahrens gemäß der vorliegenden Anmeldung,
- Fig. 4: ein Diagramm eines weiteren Ausführungsbeispiels eines Verfahrens gemäß der vorliegenden Anmeldung,
- Fig. 5: ein beispielhaftes Anlagenzustandsdiagramm,
- Fig. 6: ein beispielhaftes Diagramm zum Prüfen der Kollinearität durch Korrelation, und
- Fig. 7: eine schematische Ansicht eines Ausführungsbeispiels einer Rechenvorrichtung gemäß der vorliegenden Anmeldung.

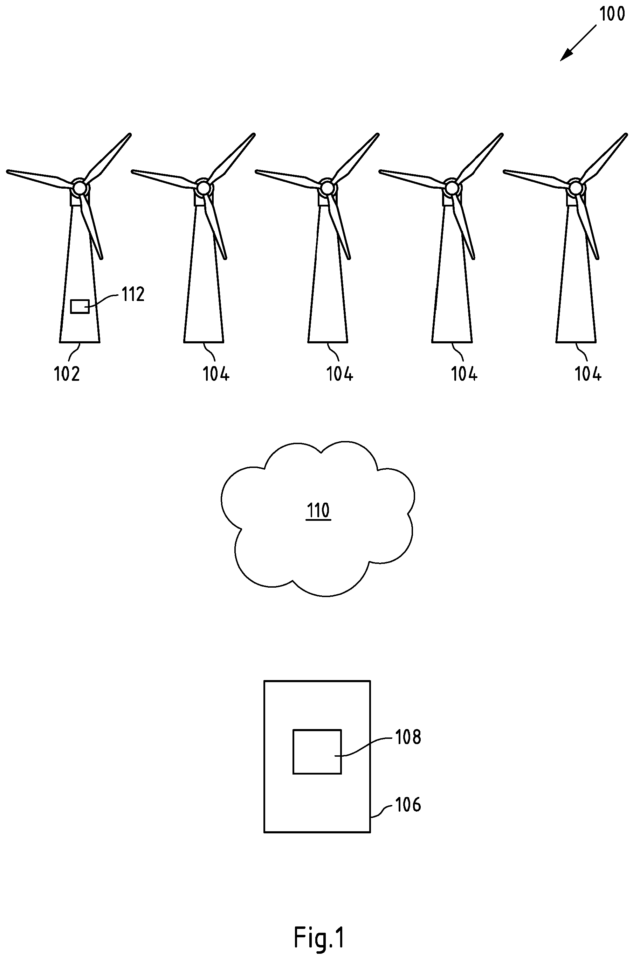

Die Figur 1 zeigt eine schematische Ansicht eines Beispiels eines Windparks 100 mit einer Mehrzahl von Windkraftanlagen 102, 104. Hierbei bezeichnet das Bezugszeichen 102 die (ausgewählte) Referenz-Windkraftanlage und das Bezugszeichen 104 die weiteren Windkraftanlagen des Windparks 100. Der Windpark 100 kann ein Onshore-Windpark und/oder ein Offshore-Windpark sein.

Der Windpark 100 kann vorzugsweise über eine (zentrale) Steuervorrichtung 106 verfügen, insbesondere umfassend mindestens ein Steuermodul 108, beispielsweise ein SCADA-Steuermodul 108.

Insbesondere können die Betriebsparameterwerte mindestens eines Betriebsparameters von mindestens einer Windkraftanlage 102, 104, vorzugsweise sämtlichen Windkraftanlagen, des Windparks 100 erfasst und beispielsweise über ein (drahtloses und/oder drahtgebundenes) Kommunikationsnetz 110 an die (zentrale) Steuervorrichtung 106 übertragen werden. Bevorzugte Betriebsparameter sind beispielsweise die in Tabelle 1 genannten Parameter.

Das mindestens eine Steuermodul 108 kann vorzugsweise den Windpark in herkömmlicher Weise steuern und/oder regeln, basierend zumindest auch auf den erhaltenen (SCADA) Betriebsdatensätzen der Windkraftanlagen 102, 104.

Ferner können die Betriebsdatensätze aufgezeichnet bzw. gespeichert werden (in einem nicht dargestellten Datenspeicher (z.B. der Steuervorrichtung 106)). Dies kann ohnehin zu Dokumentationszwecken vorgesehen sein. Vorzugsweise können die Betriebsdatensätze der Windkraftanlage 102, 104 gespeichert werden und zum Bestimmen eines jeweiligen Anlagenzustands der jeweiligen Windkraftanlage 102, 104 verwendet werden (wie noch beschrieben werden wird).

Wie ferner zu erkennen ist, weist die Referenz-Windkraftanlage 102 eine Sensoranordnung 112 mit mindestens einem Belastungssensor (insbesondere einer Vielzahl von Belastungssensoren) auf. Der mindestens eine Belastungssensor ist eingerichtet zum Messen mindestens eines Belastungsparameters (z.B. Blattfußbelastungsparameter, Rotorbelastungsparameter, Turmbelastungsparameter, Turmtorsionsparameter und/oder Turmspitzenmomentparameter).

Die gemessenen Belastungsparameterwerte des mindestens einen Belastungsparameters können vorzugsweise in einem (nicht gezeigten) Datenspeicher (z.B. der Steuervorrichtung 106) für eine nachfolgende Weiterverarbeitung gespeichert werden, wie noch beschrieben werden wird.

Vorzugsweise können die Windkraftanlagen 102, 104 des Windparks 100 vom gleichen Windkraftanlagentyp sein.

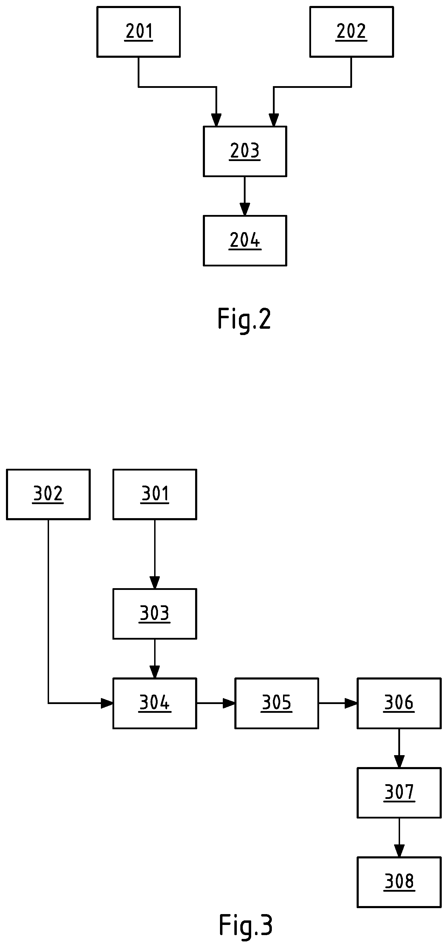

Die Figur 2 zeigt ein Diagramm eines Ausführungsbeispiels eines Verfahrens gemäß der vorliegenden Anmeldung. Das Verfahren ist insbesondere ein computer-implementiertes Verfahren zum Trainieren eines Machine-Learning-Modells. Das Machine-Learning-Modell ist verwendbar zum mittelbaren Bestimmen einer Restnutzungsdauer einer Windkraftanlage, insbesondere zum Bestimmen des strukturellen und/oder mechanischen Anlagenzustands der Windkraftanlage.

In einem Schritt 201 erfolgt ein Bereitstellen einer Vielzahl von Betriebsdatensätzen einer Referenz-Windkraftanlage. Ein Betriebsdatensatz ist insbesondere ein SCADA-Betriebsdatensatz. Bei einer Onshore-Windkraftanlage kann der Betriebsdatensatz entsprechend der beispielhaften Tabelle 1 gebildet sein. Es versteht sich, dass andere, weitere oder weniger Betriebsparameter und/oder -werte enthalten sein können. Bei einer Offshore-Windkraftanlage kann der Betriebsdatensatz entsprechend der beispielhaften Tabellen 1 und 2 gebildet sein. Dies umfasst insbesondere, dass ein Betriebsdatensatz aus zwei separaten Sub-Betriebsdatensätzen gebildet sein kann. Es versteht sich auch hier, dass andere, weitere oder weniger Betriebsparameter und/oder -werte enthalten sein können

Jedem Betriebsdatensatz kann insbesondere eine Betriebsdatenzeitdauer zugeordnet sein, die sich auf den Messzeitraum der Messung des mindestens einen Betriebsparameters bezieht. Beispielsweise kann eine Betriebsdatenzeitdauer einen Anfangszeitpunkt (z.B. 1.1.21, 1:00 Uhr), eine Zeitlänge (z.B. 10 min) und einen Endzeitpunkt (z.B. 1.1.21, 1:10 Uhr) umfassen.

Insbesondere kann für die gesamte Erfassungs- bzw. Messzeitdauer die Vielzahl von Betriebsdatensätzen bereitgestellt werden.

In Schritt 202 erfolgt ein Bereitstellen einer Vielzahl von Belastungsdatensätze der Referenz-Windkraftanlage, wobei ein Belastungsdatensatz zumindest auf mindestens einem an der Referenz-Windkraftanlage gemessenen Belastungsparameter basiert.

Jedem Belastungsdatensatz kann insbesondere eine Belastungsdatenzeitdauer zugeordnet sein, die sich auf den Messzeitraum der Messung des mindestens einen Belastungsparameters bezieht. Diese Belastungsdatenzeitdauer kann entsprechend der Betriebsdatenzeitdauer gewählt sein.

Beispielsweise kann eine Belastungsdatenzeitdauer einen Anfangszeitpunkt (z.B. 1.1.21; 1:00 Uhr), eine Zeitlänge (z.B. 10 min) und einen Endzeitpunkt (z.B. 1.1.21, 1:10 Uhr) umfassen. Bei anderen Varianten (insbesondere wenn die Zeitlänge stets fest definiert ist) kann eine Betriebsdatenzeitdauer und/oder eine Belastungsdatenzeitdauer auch durch einen einzelnen Zeitstempel in ausreichender Weise bestimmt sein.

In einem weiteren Schritt 203 erfolgt ein Generieren einer Vielzahl von Windkraft-Trainingsdatensätzen zum Trainieren eines Machine-Learning-Modells. Das Generieren erfolgt durch synchronisiertes Zuordnen eines jeweiligen Betriebsdatensatzes zu einem jeweiligen Belastungsdatensatz.

Das (zeitlich) synchronisierte Zuordnen eines Betriebsdatensatzes zu einem Belastungsdatensatzes erfolgt insbesondere abhängig von den jeweils zugeordneten Belastungsdatenzeitdauern bzw. Betriebsdatenzeitdauern. Insbesondere kann hierzu der Anfangszeitpunkt und/oder der Endzeitpunkt ausgewertet werden. Wenn beispielsweise wie im oben genannten Beispiel der Anfangszeitpunkt (z.B. 1.1.21, 1:00 Uhr) und/oder Endzeitpunkt (z.B. 1.1.21, 1:10 Uhr) eines Betriebsdatensatzes und eines Belastungsdatensatzes gleich sind, dann können diese Betriebsdatensätze einander zugeordnet werden.

Das Zuordnen umfasst insbesondere das Bilden eines Windkraft-Trainingsdatensatzes, enthaltend die Daten des Betriebsdatensatzes und des zugeordneten Belastungsdatensatzes. Anders ausgedrückt, kann ein Betriebsdatensatz mit einem Belastungsdatensatz in Korrelation gebracht werden, um einen Windkraft-Trainingsdatensatz zu bilden.

Beispielhafte Windkraft-Trainingsdatensätze WTD₁, WTD₂, ..., WTDₙ (n ist eine natürliche Zahl für unterschiedliche Trainingsdatensatzzeiträume, um entsprechend unterschiedliche Betriebsdatenzeiträumen zu repräsentieren) sind in der Tabelle 4 dargestellt. Die genannten Parameterwerte sind Veranschaulichungsbeispiele.

**Tabelle 4**

| | **WTD₁** | **WTD₂** | **WTDₙ** |
|---|---|---|---|
| **Blade_Load_Ind** | 4.002E+03 | 4.344E+03 | 4.172E+03 |
| **Blade_Load_dev_Ind** | 2.444E+02 | 3.050E+02 | 1.811E+02 |
| **Power_Active_Mean** | 1.300E+03 | 1.465E+03 | 1.370E+03 |
| **Power_Active_Min** | 1.067E+03 | 1.175E+03 | 1.195E+03 |
| **Power_Active_Max** | 1.502E+03 | 1.757E+03 | 1.568E+03 |
| **Power_Active_dev** | 1.081E+02 | 1.707E+02 | 6.498E+01 |
| **Rotor_Speed_Mean** | 1.179E+01 | 1.223E+01 | 1.205E+01 |
| **Rotor_Speed_Min** | 1.117E+01 | 1.170E+01 | 1.153E+01 |
| **Rotor_Speed_Max** | 1.224E+01 | 1.258E+01 | 1.240E+01 |
| **Rotor_Speed_dev** | 3.198E-01 | 2.755E-01 | 1.818E-01 |
| ... | ... | ... | ... |

Hierbei meint Mean den Mittelwert, Min den minimalen Wert, Max den maximalen Wert, dev die Standardabweichung und Ind einen Ermüdungsbelastungsindikator. Es versteht sich, dass (wie durch ... angedeutet) eine Vielzahl weiterer Daten enthalten sein kann.

In einem (optionalen) Schritt 204 erfolgt ein Trainieren des Machine-Learning-Modells mit den generierten Windkraft-Trainingsdatensätzen. Vorzugsweise kann ein Teil der generierten Windkraft-Trainingsdatensätze als Validierungsdatensätze verwendet werden. In insbesondere herkömmlicher Weise kann ein Machine-Learning-Modell vorzugsweise in Form eines neuronalen Netzes trainiert werden. Hierbei kann für eine Eingabe ein Windkraft-Trainingsdatensatz in einen Vektor, eine Matrix und/oder einen Tensor transformiert werden.

Die Figur 3 zeigt ein Diagramm eines weiteren Ausführungsbeispiels eines Verfahrens gemäß der vorliegenden Anmeldung. Zur Vermeidung von Wiederholungen werden nachfolgend im Wesentlichen nur die Unterschiede zu dem Ausführungsbeispiel nach Figur 2 beschrieben und ansonsten auf die vorherigen Ausführungen verwiesen.

Um den mindestens einen Belastungsdatensatz bereitzustellen, kann in Schritt 301 ein Messen mindestens eines Belastungsparameters der Referenz-Windkraftanlage (also von mindestens einem Bauteil der Referenz-Windkraftanlage) während einer Messzeitdauer (vorzugsweise zumindest 6 Monate) erfolgen.

Insbesondere kann eine zumindest nahezu kontinuierliche Messung und damit Überwachung erfolgen. Wie bereits beschrieben wurde, kann das Messen des mindestens einen Belastungsparameters insbesondere entsprechend dem Standard IEC 61400-13 [2] erfolgen. Vorzugsweise können die Belastungsparameterwerte einer Vielzahl von Belastungsparametern einer Mehrzahl von Bauteilen der Referenz-Windkraftanlage erfolgen.

In Schritt 303, der zumindest teilweise parallel zu Schritt 301 durchgeführt werden kann, kann ein Umwandeln des mindestens einen gemessenen Belastungsparameterwertes der Referenz-Windkraftanlage in mindestens einen Ermüdungsbelastungsindikator erfolgen. Vorzugsweise können sämtliche Belastungsparameterwerte umgewandelt werden. Das Umwandeln kann insbesondere auf einer Rainflow Counting Methode basieren. Besonders bevorzugt kann Umwandeln des mindestens einen gemessenen Belastungsparameterwertes der Referenz-Windkraftanlage in mindestens einen Ermüdungsbelastungsindikator entsprechend dem Standard ASTM E1049 - 85(2017) durchgeführt werden.

In Schritt 303 können zudem die Belastungsdatensätze gebildet werden. Hierzu können die Ermüdungsbelastungsindikatoren (insbesondere entsprechend dem Zeitstempel, mit dem die Belastungsparameterwerte (bzw. die entsprechenden Abtastwerte) versehen sind) in eine Vielzahl von Belastungsdatensätzen jeweils mit einer zuvor beschriebenen Belastungsdatenzeitdauer unterteilt werden. Die Belastungsdatenzeitdauer kann vorzugsweise zu der Betriebsdatenzeitdauer korrespondieren. Insbesondere ist jedem bereitgestellten (SCADA-) Betriebsdatensatz eine Betriebsdatenzeitdauer zugeordnet.

Die Betriebsparameterwerte des mindestens einen Betriebsparameters können während der Messzeitdauer erfasst und insbesondere (in bekannter Weise) in Form von Betriebsdatensätzen in Schritt 302 bereitgestellt werden (vgl. z.B., Tabelle 1 und/oder 2).

In Schritt 304 erfolgt ein Generieren einer Vielzahl von Windkraft-Trainingsdatensätzen (vgl. Tabelle 4) zum Trainieren eines Machine-Learning-Modells durch synchronisiertes Zuordnen eines jeweiligen Betriebsdatensatz zu einem jeweiligen Belastungsdatensatz, wie zuvor beschrieben wurde.

In Schritt 305 kann insbesondere eine Vorverarbeitung bzw. Vorbehandlung der generierten Windkraft-Trainingsdatensätze erfolgen. Beispielsweise kann ein Entfernen von ungültigen Werten und/oder Indikatoren erfolgen. Auch kann eine Merkmalsauswahl in zuvor beschriebener Weise in Schritt 305 durchgeführt werden. Beispiele hierfür sind die sequentielle Merkmalsauswahl (z.B.: Ferri, F.J. & Pudil, Pavel & Hatef, M.. (2001). Comparative Study of Techniques for Large-Scale Feature Selection. Pattern Recognition in Practice, IV: Multiple Paradigms, Comparative Studies and Hybrid Systems. 16. 10.1016/B978-0-444-81892-8.50040-7), Rekursive Merkmalsauswahl (z.B. Guyon, I, J Weston, S Barnhill, and V Vapnik. 2002. "Gene Selection for Cancer Classification Using Support Vector Machines." Machine Learning 46 (1): 389-422.), Linare Regression mit L1 Regulation (Lasso) und/oder o Bayesian LASSO (z.B. Trevor Park & George Casella (2008) The Bayesian Lasso, Journal of the American Statistical Association, 103:482, 681-686, DOI: 10.1198/016214508000000337).

In Schritt 306 erfolgt insbesondere ein Aufteilen der generierten Windkraft-Trainingsdatensätze in Trainingsdatensätze (z.B. 80 %) und Validierungsdatensätze (z.B. 20 %). Zudem erfolgt insbesondere ein Transformieren der Windkraft-Trainingsdatensätze in Datendarstellungen, die als Eingabe für das zu trainierende Machine-Learning Modell geeignet sind, also insbesondere von dem zu trainierenden Machine-Learning Modell (in bekannter Weise) abhängen können. Vorzugsweise erfolgt ein Transformieren eines Windkraft-Trainingsdatensatzes in einen Vektor, eine Matrix und/oder einen Tensor.

In Schritt 307 erfolgt insbesondere ein Trainieren bzw. Lernen des Machine- Learning Modells während einer Trainingszeitdauer. Vorzugsweise kann ein neuronales Netz trainiert werden. Vorzugsweise erfolgt ein sogenanntes überwachtes Trainieren bzw. Lernen mittels der Trainingsdatensätze und der Validierungsdatensätze.

Während der Trainingszeitdauer kann ein Modell zum Abschätzen der aleatorischen und/oder epistemischen Unsicherheiten angewendet werden, wobei die Abschätzung durch Anwendung mindestens eines Machine-Learning-Verfahren erreicht werden kann. Während der Trainingszeitdauer bzw. beim Trainingsvorgang kann mindestens eine Regularisierungstechnik angewendet werden. Hierdurch kann das Risiko eines Overfittings zumindest reduziert werden. Die mindestens eine Regularisierungstechnik (insbesondere das mindestens eine Machine-Learning-Verfahren) kann insbesondere ausgewählt sein aus der Gruppe, umfassend:
- Lineare Bayes'sche Regression (auch als Bayesian linear regression bezeichnet),
- Bayes'sche Neuronales Netzwerk mit Concrete Dropout (auch als Bayesian neural network by concrete dropout bezeichnet) oder Bayes'sche Neuronales Netzwerk mit Variationsinferenz (Bayesian neural network by Variational Inference),
- Adaptive Bayes'sche Spline Regression (auch als Bayesian adaptive spline regression bezeichnet).

Die genannten Methoden beinhalten bereits eine Abschätzung der aleatorischen und/oder epistemischen Unsicherheiten. Insbesondere die Bayes'schen Neuronalen Netzwerke erlauben die Abbildung heteroskedastischer Unsicherheiten, d.h. Unsicherheiten, deren Größe vom Erwartungswert der geschätzten Zielgröße (Anlagenzustand) abhängig ist.

Alternativ (oder zusätzlich) können diese während der Trainingszeitdauer bzw. beim Trainingsvorgang durch andere Verfahren (im speziellen Bootstrapping) ermittelt werden.

Nach dem Training kann in Schritt 308 ein trainiertes Machine-Learning Modell zur weiteren Verwendung zur Verfügung gestellt werden.

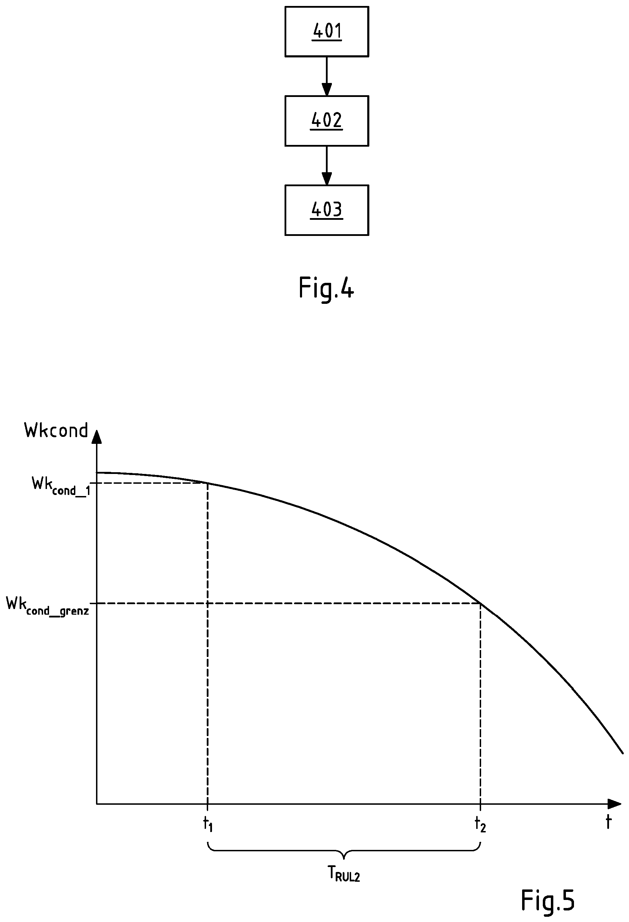

Die Figur 4 zeigt ein Diagramm eines Ausführungsbeispiels eines Verfahrens zum Verwenden eines Machine-Learning-Modells, welches gemäß der vorliegenden Anmeldung, beispielsweise entsprechend dem Ausführungsbeispiel nach Figur 2 und/oder 3 trainiert wurde.

In einem ersten Schritt 401 erfolgt ein Eingeben mindestens eines Betriebsdatensatzes (vorzugsweise einer Vielzahl von Betriebsdatensätzen) einer weiteren Windkraftanlage in das Machine-Learning-Modell. Vorzugsweise können die über einen bestimmten Zeitraum (insbesondere von zumindest 2 Monaten, vorzugsweise zumindest 3 Monaten (und z.B. höchstens 24 Monate)) erfassten Betriebsdatensätze eingegeben werden. Die weitere Windkraftanlage ist vorzugsweise vom gleichen, zumindest ähnlichen Typ, wie die Referenz-Windkraftanlage. Vorzugsweise zusätzlich kann die weitere Windkraftanlage von dem gleichen Windpark umfasst sein, wie die Referenz-Windkraftanlage (vgl. z.B. Fig. 1). Es versteht sich, dass die weitere Windkraftanlage auch aus einem anderen Windpark stammen kann.

In Schritt 402 erfolgt ein Ausgeben, durch das Machine-Learning-Modell, mindestens eines Anlagenzustandsdatensatzes. Der Anlagenzustandsdatensatz kann beispielsweise zumindest einen ermittelten Ermüdungsbelastungsindikator der weiteren Windkraftanlage enthalten. Es versteht sich, dass auch ein anderer Belastungsparameterindikator ausgegebenen werden kann.

In einem optionalen Schritt 403 kann ein Bestimmen der Restlaufzeit (RUL) der weiteren Windkraftanlage erfolgen, basierend auf dem mindestens einen ausgegebenen Anlagenzustandsdatensatz der weiteren Windkraftanlage. Dies umfasst insbesondere das Bestimmen, insbesondere Abschätzen, des RUL von zumindest einem Bauteil der weiteren Windkraftanlage.

Indem anmeldungsgemäß ein Machine-Learning-Modell mit Belastungsdaten und Betriebsdaten einer Referenz-Windkraftanlage trainiert wird, um Muster zwischen diesen Daten zu erkennen und entsprechend in dem trainierten Machine-Learning-Modell "abzuspeichern", kann zumindest der Anlagenzustand einer weiteren Windkraftanlage nur anhand der Betriebsdaten dieser weiteren Windkraftanlage (also ohne eine tatsächliche Messung eines Belastungsparameters) mittels des trainierten Machine-Learning Modells bestimmt, insbesondere mit einer hohen Zuverlässigkeit, abgeschätzt werden. Wie bereits beschrieben wurde, umfasst der Anlagenzustand der Windkraftanlage den Zustands einer (oder mehrerer) Strukturkomponente(n) der Windkraftanlage.

Die Figur 5 zeigt ein beispielhaftes Anlagenzustandsdiagramm, mit dessen Hilfe insbesondere der RUL bestimmt, also insbesondere abgeschätzt werden kann.

Auf der y-Achse ist der Anlagenzustand WK_{cond} der Windkraftanlage bzw. Bauteilzustands WK_{cond} einer Strukturkomponente der Windkraftanlage dargestellt und auf der x-Achse die Zeit t.

Zunächst kann angenommen werden, dass zum (augenblicklichen) Zeitpunkt t₁ der (augenblickliche) Anlagenzustand WK_{cond_1} ist. Dieser kann insbesondere entsprechend dem Verfahren der Figur 4 bestimmt werden.

Der bestimmte Anlagenzustandsgrenzwert WK_{cond_grenz} kann vorgegeben sein. Dann kann mit Hilfe von Modellen, wie beschrieben wurde, der Zeitpunkt t₂ bestimmt werden. Der Zeitpunkt t₂ ist insbesondere der Zeitpunkt, ab dem die Windkraftanlage voraussichtlich (aus Sicherheitsgründen) nicht mehr weiterbetrieben werden kann. Dann kann die RUL bzw. T_{RUL} allgemein wie folgt berechnet werden: T_{RUL} = t₂ - t1.

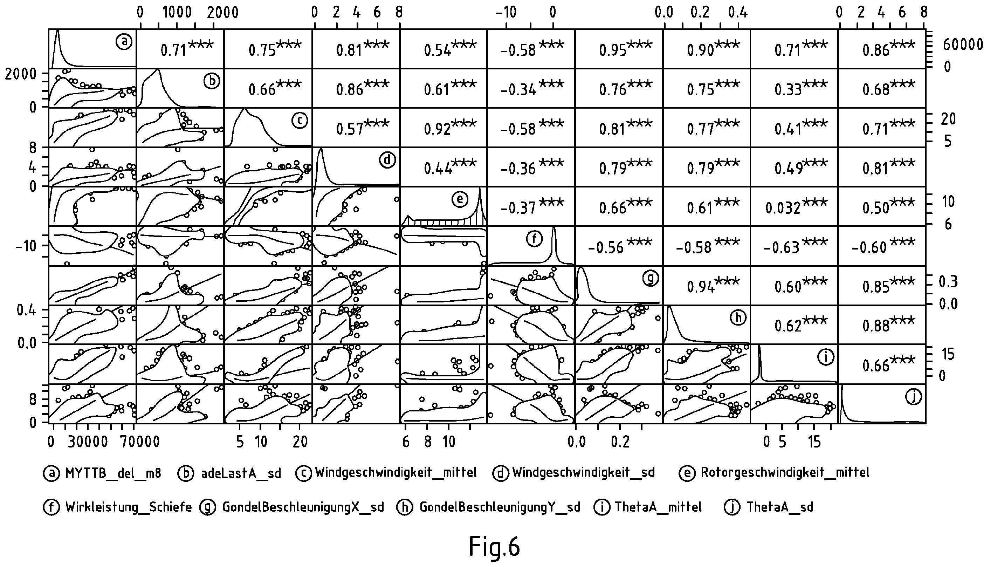

Die Figur 6 zeigt ein beispielhaftes Diagramm zur Veranschaulichung des Prüfens der Kollinearität durch Korrelation, wie es beispielsweise in Schritt 305 durchgeführt werden kann.

Wie zu insbesondere aus der Figur 6 zu erkennen ist, werden die Korrelationen (z.B. ausgedrückt bspw. durch den Korrelationskoeffizienten nach Pearson im Intervall [-1 ..,1]) der für die Verwendung vorgesehenen Betriebsparameter untereinander berechnet. Betriebsparameter mit einem hohen Korrelationskoeffizienten (typischerweise >= 0.8 bis 0.9 oder <= -0.8 bis -0.9) werden als kollinear bezeichnet und sollten nicht gemeinsam für das Training von Machine-Learning-Verfahren benutzt werden.

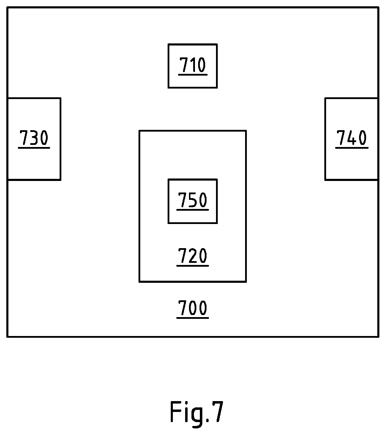

Die Figur 7 zeigt eine schematische Ansicht eines Ausführungsbeispiels einer Rechenvorrichtung 700 gemäß der vorliegenden Anmeldung. Die Rechenvorrichtung 700 umfasst mindestens einen Prozessor (z.B. Mikroprozessor, DSP, FPGA und/oder dergleichen) und mindestens einen Datenspeicher 720, enthaltend Computerprogrammcode. Der Datenspeicher 720 enthält insbesondere das trainierte oder noch zu trainierende Machine-Learning-Modell 750.

Ferner ist mindestens eine Kommunikationsschnittstelle 730 und/oder mindestens eine Nutzerschnittstelle 740 vorgesehen, eingerichtet zum Eingeben und/oder Ausgeben von Daten, wie Betriebsdatensätzen, Trainingsdatensätzen und/oder Anlagenzustandsdatensätzen.

Der Datenspeicher 720 und der Prozessor 710 sind derart eingerichtet, dass die Rechenvorrichtung 700 veranlasst wird zum Generieren mindestens eines Anlagenzustandsdatensatzes, basierend auf mindestens einem bereitgestellten Betriebsdatensatz und zumindest teilweise unter der Verwendung eines Machine-Learning-Modells 750, welches beispielsweise entsprechend dem Ausführungsbeispiel nach Figur 2 und/oder Figur 3 trainiert wurde.

## Patentansprüche

1. Verfahren, insbesondere computer-implementiertes Verfahren, zum Trainieren eines Machine-Learning-Modells (750), das zum Bestimmen einer Restnutzungsdauer einer weiteren Windkraftanlage (104) verwendet wird, umfassend:
- Bereitstellen einer Vielzahl von Betriebsdatensätzen einer Referenz-Windkraftanlage (102),
- Bereitstellen einer Vielzahl von Belastungsdatensätze der Referenz-Windkraftanlage (102), wobei ein Belastungsdatensatz zumindest auf mindestens einem an der Referenz-Windkraftanlage (102) gemessenen Belastungsparameter basiert, und
- Generieren einer Vielzahl von Windkraft-Trainingsdatensätzen zum Trainieren des Machine-Learning-Modells (750) durch synchronisiertes Zuordnen eines jeweiligen Betriebsdatensatz zu einem jeweiligen Belastungsdatensatz.

2. Verfahren nach Anspruch 1, **dadurch gekennzeichnet, dass**
- das Machine-Learning-Modell (750) mit den generierten Windkraft-Trainingsdatensätzen während der Trainingszeitdauer trainiert wird.

3. Verfahren nach Anspruch 2, **dadurch gekennzeichnet, dass**
- ein Teil der generierten Windkraft-Trainingsdatensätzen als Validierungsdatensätze während einer Trainingszeitdauer verwendet wird.

4. Verfahren nach einem der vorherigen Ansprüche, **dadurch gekennzeichnet, dass**
- ein bereitgestellter Betriebsdatensatz mindestens einen Betriebsparameter der Referenz-Windkraftanlage (102) enthält,
- wobei der mindestens eine Betriebsparameter ausgewählt ist aus der Gruppe, umfassend:
- Turmspitzenbeschleunigung,
- Pitchwinkel,
- Pitchgeschwindigkeit,
- Rotorgeschwindigkeit,
- Elektrische Leistung, insbesondere elektrische Wirkleistung,
- Gondelwindgeschwindigkeit.

5. Verfahren nach Anspruch 4, **dadurch gekennzeichnet, dass**
- ein Betriebsdatensatz als Betriebsparameterwert eines Betriebsparameters mindestens einen Betriebsparameterwert umfasst, ausgewählt aus der Gruppe umfassend:
- maximaler Betriebsparameterwert erfasst während der Betriebsdatenzeitdauer,
- minimaler Betriebsparameterwert erfasst während der Betriebsdatenzeitdauer,
- Betriebsparametermittelwert ermittelt aus den während der Betriebsdatenzeitdauer erfassten Betriebsparameterwerten,
- Standardabweichung ermittelt aus den während der Betriebsdatenzeitdauer erfassten Betriebsparameterwerten.

6. Verfahren nach einem der vorherigen Ansprüche, **dadurch gekennzeichnet, dass**
- ein bereitgestellter Belastungsdatensatz auf mindestens einem gemessenen Belastungsparameter der Referenz-Windkraftanlage (102) basiert,
- wobei der Belastungsparameter ausgewählt ist aus der Gruppe, umfassend:
- Blattwurzelbelastungsparameter,
- Rotorbelastungsparameter,
- Turmbelastungsparameter,
- Turmtorsionsparameter,
- Turmkopfmomentparameter.

7. Verfahren nach einem der vorherigen Ansprüche, **dadurch gekennzeichnet, dass** das Verfahren umfasst:
- Messen des mindestens einen Belastungsparameters der Referenz-Windkraftanlage (102),
- wobei das Messen des mindestens einen Belastungsparameters insbesondere entsprechend dem Standard IEC 61400-13 [2] erfolgt.

8. Verfahren nach Anspruch 6 oder 7, **dadurch gekennzeichnet, dass**
- als Belastungsparameterwert eines Belastungsparameters ein Belastungsparameterwert vorgesehen ist, ausgewählt aus der Gruppe, umfassend:
- maximaler Belastungsparameterwert gemessen während der Belastungsdatenzeitdauer,
- minimaler Belastungsparameterwert gemessen während der Belastungsdatenzeitdauer,
- Belastungsparametermittelwert ermittelt aus den während der Belastungsdatenzeitdauer gemessenen Belastungsparameterwerten,
- Standardabweichung ermittelt aus den während der Belastungsdatenzeitdauer gemessenen Belastungsparameterwerten.

9. Verfahren nach einem der vorherigen Ansprüche, **dadurch gekennzeichnet, dass** das Verfahren umfasst:
- Messen des mindestens einen Belastungsparameters der Referenz-Windkraftanlage (102) während einer Messzeitdauer, und
- Erfassen der Betriebsdatenparameterwerte der Referenz-Windkraftanlage (102) während der Messzeitdauer,
- wobei die Messzeitdauer insbesondere mindestens 3 Monate beträgt, vorzugsweise mindestens 6 Monate.

10. Verfahren nach einem der vorherigen Ansprüche, **dadurch gekennzeichnet, dass** das Verfahren umfasst:
- Bilden eines Belastungsdatensatzes durch Umwandeln des mindestens einen gemessenen Belastungsparameterwertes der Referenz-Windkraftanlage (102) in mindestens einen Ermüdungsbelastungsindikator,
- wobei das Umwandeln insbesondere auf einer Rainflow Counting Methode basiert.

11. Verfahren nach einem der vorherigen Ansprüche, **dadurch gekennzeichnet, dass**
- während der Trainingszeitdauer mindestens eine Regularisierungstechnik angewendet wird,
- wobei die Regularisierungstechnik insbesondere ausgewählt ist aus der Gruppe, umfassend:
- Lineare Bayes'sche Regression,
- Bayes'sche Neuronales Netzwerk mit Concrete Dropout,
- Bayes'sche Neuronales Netzwerk mit Variationsinferenz
- Adaptive Bayes'sche Spline Regression,
und/oder
- während der Trainingszeitdauer ein Modell zum Abschätzen der aleatorischen und/oder epistemischen Unsicherheiten angewendet wird, wobei die Abschätzung durch Anwendung mindestens eines Machine-Learning-Verfahren erreicht wird, wobei das Machine-Learning-Verfahren insbesondere ausgewählt ist aus der Gruppe, umfassend:
- Lineare Bayes'sche Regression,
- Bayes'sche Neuronales Netzwerk mit Concrete Dropout,
- Bayes'sche Neuronales Netzwerk mit Variationsinferenz
- Adaptive Bayes'sche Spline Regression,
und/oder
wobei die Abschätzung durch Bootstrapping realisiert wird.

12. Verfahren zum Verwenden eines Machine-Learning-Modells (750), welches nach einem der Ansprüche 1 bis 11 trainiert wurde, umfassend:
- Eingeben mindestens eines Betriebsdatensatzes der weiteren Windkraftanlage (104) in das Machine-Learning-Modell (750), und
- Ausgeben, durch das Machine-Learning-Modell (750), mindestens eines Anlagenzustandsdatensatzes.

13. Verfahren nach Anspruch 12, **dadurch gekennzeichnet, dass**
- die weitere Windkraftanlage (104) ein Windkraftanlagentyp ist, der identisch ist zu dem Windkraftanlagentyp der Referenz-Windkraftanlage (102),
und/oder
- die weitere Windkraftanlage (104) und die Referenz-Windkraftanlage (102) von dem gleichen Windpark (100) umfasst sind.

14. Verfahren nach Anspruch 12 oder 13, **dadurch gekennzeichnet, dass** das Verfahren umfasst:
- Bestimmen der Restlaufzeit der weiteren Windkraftanlage (104, basierend auf dem mindestens einen Anlagenzustandsdatensatz der weiteren Windkraftanlage (104).

15. Rechenvorrichtung (700), umfassend mindestens einen Datenspeicher (720), enthaltend Computerprogrammcode, und mindestens einen Prozessor (710), wobei der Datenspeicher (720) und der Prozessor (710) eingerichtet sind, derart, dass die Rechenvorrichtung (700) veranlasst wird zum Generieren mindestens eines Anlagenzustandsdatensatzes, basierend auf mindestens einem bereitgestellten Betriebsdatensatz und zumindest teilweise unter der Verwendung eines Machine-Learning-Modells (750), welches nach einem der Ansprüche 1 bis 11 trainiert wurde.

## Claims

1. A method, in particular a computer-implemented method, for training a machine learning model (750) used for determining a remaining useful life of a further wind turbine (104), comprising:
- providing a plurality of operation data sets of a reference wind turbine (102),
- providing a plurality of load data sets of the reference wind turbine (102), wherein a load data set is based on at least one load parameter measured at the reference wind turbine (102), and
- generating a plurality of wind turbine training data sets for training the machine learning model (750) by synchronously assigning a respective operation data set with a respective load data set.

2. The method according to claim 1, **characterized in that**
- the machine learning model (750) is trained with the generated wind power training data sets during the training time period.

3. The method according to claim 2, **characterized in that**
- a portion of the generated wind power training data sets is used as validation data sets during a training time period.

4. The method according to any one of the previous claims, **characterized in that**
- a provided operation data set contains at least one operation parameter of the reference wind turbine (102),
- wherein the at least one operation parameter is selected from the group comprising:
- tower top acceleration,
- pitch angle,
- pitch speed,
- rotor speed,
- electrical power, in particular active electrical power,
- nacelle wind speed.

5. The method according to claim 4, **characterized in that**
- an operation data set comprises as operation parameter value of an operation parameter at least one operation parameter value selected from the group comprising:
- maximum operation parameter value detected during the operating data period,
- minimum operation parameter value detected during the operation data time period,
- operation parameter mean value determined from the operation parameter values detected during the operation data time period,
- standard deviation determined from the operation parameter values detected during the operation data time period.

6. The method according to one of the previous claims, **characterized in that**
- a provided load data set is based on at least one measured load parameter of the reference wind turbine (102),
- wherein the load parameter is selected from the group comprising:
- blade root load parameter,
- rotor load parameter,
- tower load parameter,
- tower torsion parameter,
- tower top moment parameter.

7. The method according to any of the previous claims, **characterized in that** the method comprises:
- measuring the at least one load parameter of the reference wind turbine (102),
- wherein measuring the at least one load parameter is in particular performed according to the IEC 61400-13 standard [2].

8. The method according to claim 6 or 7, **characterized in that**
- as load parameter value of a load parameter a load parameter value is provided, selected from the group comprising:
- maximum load parameter value measured during the load data time period,
- minimum operation parameter value measured during the load data time period,
- load parameter mean value determined from the load parameter values measured during the load data time period,
- standard deviation determined from the load parameter values measured during the load data time period.

9. The method according to any of the previous claims, **characterized in that** the method comprises:
- measuring the at least one load parameter of the reference wind turbine (102) during a measurement time period; and
- detected the operational data parameter values of the reference wind turbine (102) during the measurement time period,
- wherein the measurement time period is in particular at least 3 months, preferably at least 6 months.

10. The method according to any one of the previous claims, **characterized in that** the method comprises:
- forming a load data set by converting the at least one measured load parameter value of the reference wind turbine (102) into at least one fatigue load indicator,
- wherein the converting is based in particular on a Rainflow Counting method.

11. The method according to any one of the previous claims, **characterized in that**
- at least one regularization technique is applied during the training time period,
- wherein the regularization technique is in particular selected from the group comprising:
- linear Bayesian regression,
- Bayesian neural network with concrete dropout,
- Bayesian neural network with variational inference
- adaptive Bayesian spline regression,
and/or
- during the training time period, a model for estimating the aleatory and/or epistemic uncertainties is applied, wherein the estimation is achieved by applying at least one machine learning method, wherein the machine learning method is in particular selected from the group comprising:
- linear Bayesian regression,
- Bayesian neural network with concrete dropout,
- Bayesian neural network with variational inference
- adaptive Bayesian Spline Regression,
and/or
- wherein the estimation is implemented by bootstrapping.

12. A method of using a machine learning model (750) trained according to any one of claims 1 to 11, comprising:
- inputting at least one operation data set of the further wind turbine (104) into the machine learning model (750), and
- outputting, by the machine learning model (750), at least one turbine condition data set.

13. The method according to claim 12, **characterized in that**
- the further wind turbine (104) is a wind turbine type identical to the wind turbine type of the reference wind turbine (102),
and/or
- the further wind turbine (104) and the reference wind turbine (102) are comprised by the same wind farm (100).

14. The method according to claim 12 or 13, **characterized in that** the method comprises:
- determining the remaining runtime of the further wind turbine (104) based on the at least one turbine condition data set of the further wind turbine (104).

15. A computing device (700) comprising at least one data memory (720) containing computer program code and at least one processor (710), wherein the data memory (720) and the processor (710) are configured such that the computing device (700) is caused to generate at least one turbine condition data set based on at least one provided operation data set and at least in part using a machine learning model (750) trained according to any one of claims 1 to 11.

## Revendications

1. Méthode, en particulier méthode mis en œuvre par ordinateur, pour entraîner un modèle d'apprentissage automatique (750) qui est utilisé pour déterminer une durée de vie résiduelle d'une autre éolienne (104), comprenant:
- fournir une pluralité d'ensembles de données de fonctionnement d'une éolienne de référence (102),
- fournir une pluralité d'ensembles de données de charge de l'éolienne de référence (102), où un ensemble de données de charge est basé sur au moins un paramètre de charge mesuré sur l'éolienne de référence (102), et
- générer une pluralité d'ensembles de données d'entraînement éolien pour entraîner le modèle d'apprentissage automatique (750) par attribution synchronisée d'un ensemble de données de fonctionnement respectif à un ensemble de données de charge respectif.

2. Méthode selon la revendication 1, **caractérisé en ce que**
- le modèle d'apprentissage automatique (750) est entraîné avec les ensembles de données d'entraînement éolien générés pendant la durée de l'entraînement.

3. Méthode selon la revendication 2, **caractérisé en ce que**
- une partie des ensembles de données d'entraînement éolien générés est utilisée comme ensembles de données de validation pendant une durée d'entraînement.

4. Méthode selon l'une des revendications précédentes, **caractérisé en ce qu'**
- un ensemble de données de fonctionnement fourni contient au moins un paramètre de fonctionnement de l'éolienne de référence (102),
- où ledit au moins un paramètre de fonctionnement est choisi dans le groupe comprenant:
- accélération en haut de tour,
- angle de pas,
- vitesse de pas,
- vitesse de rotor,
- puissance électrique, en particulier puissance active,
- vitesse de de nacelle.

5. Méthode selon la revendication 4, **caractérisé en ce que**
- un ensemble de données de fonctionnement comprend, en tant que valeur de paramètre de fonctionnement d'un paramètre de fonctionnement, au moins une valeur de paramètre de fonctionnement, choisi dans le groupe comprenant:
- valeur maximale de paramètre de fonctionnement enregistrée pendant la durée de données de fonctionnement,
- valeur minimale du paramètre de fonctionnement enregistrée pendant la durée de données de fonctionnement,
- valeur moyenne de paramètre de fonctionnement déterminée à partir des valeurs du paramètre de fonctionnement enregistrées pendant la durée de données de fonctionnement,
- écart type déterminé à partir des valeurs de paramètre de fonctionnement enregistrées pendant la durée de données de fonctionnement.

6. Méthode selon l'une des revendications précédentes, **caractérisé en ce que**
- un ensemble de données de charge fourni est basé sur au moins un paramètre de charge mesuré de l'éolienne de référence (102),
- le paramètre de charge étant choisi dans le groupe comprenant :
- où le paramètre de charge est choisi dans la group comprenant :
- paramètre de charge de rotor,
- paramètre de charge de tour,
- paramètre de torsion d tour,
- paramètre de couple de tête de tour.

7. Méthode selon l'une des revendications précédentes, **caractérisé en ce que** la méthode comprend :
- mesurer au moins un paramètre de charge de l'éolienne de référence (102),
- où mesurer au moins un paramètre de charge est effectuée en particulier conformément à la norme CEI 61400-13 [2].

8. Méthode selon la revendication 6 ou 7, **caractérisé en ce que**
- une valeur de paramètre de charge est prévue comme valeur de paramètre de charge. choisie dans le groupe comprenant:
- valeur maximale de paramètre de charge mesurée pendant la durée de données de charge,
- valeur minimale de paramètre de charge mesurée pendant la durée de données de charge,
- valeur moyenne de paramètre de charge déterminée à partir des valeurs des paramètres de charge mesurées pendant la durée de données de charge,
- écart type déterminé à partir des valeurs des paramètres de charge mesurées pendant la durée des données de charge.

9. Méthode selon l'une des revendications précédentes, **caractérisé en ce que** la méthode comprend :
- mesurer au moins un paramètre de charge de l'éolienne de référence (102) pendant une période de mesure, et
- enregistrer les valeurs de paramètres de données de fonctionnement de l'éolienne de référence (102) pendant la période de mesure,
- où la période de mesure est en particulier d'au moins 3 mois, de préférence d'au moins 6 mois.

10. Méthode selon l'une des revendications précédentes, **caractérisé en ce que** le procédé comprend :
- former un ensemble de données de charge par conversion de l'au moins une valeur de paramètre de charge mesurée de l'éolienne de référence (102) en au moins un indicateur de charge de fatigue,
- où la conversion est basée en particulier sur une méthode de comptage de Rainflow.

11. Méthode selon l'une des revendications précédentes, **caractérisé en ce que**
- au moins une technique de régularisation est utilisée pendant la durée de période d'entraînement,
- où la technique de régularisation est choisie en particulier dans le groupe comprenant :
- régression bayésienne linéaire,
- réseau neuronal bayésien avec abandon concret,
- réseau neuronal bayésien avec inférence de variation
- régression spline bayésienne adaptative,
et/ou
- pendant la durée de la période d'entraînement, un modèle est utilisé pour estimer les incertitudes aléatoires et/ou épistémiques, où l'estimation est obtenue par application d'au moins une méthode d'apprentissage automatique, où la méthode d'apprentissage automatique est en particulier choisi dans le groupe comprenant:
- régression bayésienne linéaire,
- réseau neuronal bayésien avec abandon concret,
- réseau neuronal bayésien avec inférence de variation
- régression spline bayésienne adaptative,
et/ou
où l'estimation est réalisée par bootstrap.

12. Méthode d'utilisation d'un modèle d'apprentissage automatique (750) qui a été entrainé selon l'une des revendications 1 à 11, comprenant :
- entrer d'au moins un ensemble de données de fonctionnement de l'éolienne supplémentaire (104) dans le modèle d'apprentissage automatique (750), et
- délivrer, par le modèle d'apprentissage automatique (750), au moins un ensemble de données d'état de l'installation.

13. Méthode selon la revendication 12, **caractérisé en ce que**
- l'autre éolienne (104) est un type d'éolienne identique au type d'éolienne de l'éolienne de référence (102),
et/ou
- l'autre éolienne (104) et l'éolienne de référence (102) font partie du même parc éolien (100).

14. Méthode selon la revendication 12 ou 13, **caractérisé en ce que** la méthode comprend :
- déterminer la durée de vie restante de l'autre éolienne (104), sur la base de l'au moins un ensemble de données d'état de l'autre éolienne (104).

15. Dispositif de calcul (700), comprenant au moins une mémoire de données (720), contenant un code de programme informatique, et au moins un processeur (710), où la mémoire de données (720) et le processeur (710) sont configurés de telle sorte que le dispositif de calcul (700) est amené à générer au moins un ensemble de données d'état d'installation, sur la base d'au moins un ensemble de données de fonctionnement fourni et au moins en partie en utilisant un modèle d'apprentissage automatique (750) qui a été entrainé selon l'une des revendications 1 à 11.
